Europäisches Patentamt

European Patent Office

Office européen des brevets

(19)

(11) Veröffentlichungsnummer: **0 249 831**
**B1**

(12) **EUROPÄISCHE PATENTSCHRIFT**

(45) Veröffentlichungstag der Patentschrift:
18.07.90

(51) Int. Cl.⁵: **F16J 15/34**

(21) Anmeldenummer: 87108167.5

(22) Anmeldetag: 05.06.87

(54) Sicherheitsdrehdurchführung.

(30) Priorität: 11.06.86 DE 3619630

(43) Veröffentlichungstag der Anmeldung:
23.12.87 Patentblatt 87/52

(45) Bekanntmachung des Hinweises auf die Patenterteilung:
18.07.90 Patentblatt 90/29

(84) Benannte Vertragsstaaten:
AT BE CH DE FR GB IT LI NL SE

(56) Entgegenhaltungen:
EP-A- 0 023 953
DE-A- 2 640 687
DE-A- 2 700 585
FR-A- 1 198 919
FR-A- 2 520 831
US-A- 3 411 795
US-A- 4 304 407

(73) Patentinhaber: HOECHST AKTIENGESELLSCHAFT,
Postfach 80 03 20, D-6230 Frankfurt am Main 80(DE)

(72) Erfinder: Buchalla, Artur, Schlesierstrasse 14,
D-8903 Bobingen(DE)

## Beschreibung

Die Erfindung betrifft eine Vorrichtung zum Transport fluider Medien von einem feststehenden Gehäuse in das Innere einer rotierenden Welle oder eines an diese rotierenden Welle angeschlossenen Körpers wie z.B. eine Galette, Walze, Rolle oder dgl.

Um gasförmige oder flüssige Stoffe von feststehenden Leitungen oder Gehäusen in rotierende Maschinenteile oder umgekehrt zu transportieren, sind sogenannte Drehdurchführungen erforderlich. Diese - auch Dichtungsköpfe oder Kupplungen genannten - Armaturen sind mit mehreren Gleitringdichtungen ausgestattet, die natürlicherweise einem Verschleiß unterliegen. Besonders bei hinsichtlich Temperatur, Druck und Drehgeschwindigkeit hoch belasteten Drehdurchführungen ist der Verschleiß relativ groß und die Standzeiten der eingesetzten Dichtungen entsprechend kurz. Dies gilt insbesondere bei dem Einsatz von Medien, die keine Schmierfähigkeit besitzen oder auf die Dichtstoffe eine abrasive Wirkung ausüben.

Einsatzmöglichkeiten für derartige Drehdurchführungen finden sich häufig in der chemischen Technik so z.B. bei der Zuführung von Reaktionsteilnehmern in rotierende oder taumelnde Reaktoren. Eine bevorzugte Anwendungsmöglichkeit für derartige Drehdurchführungen findet sich beispielsweise in der Faser- und Textilindustrie für die Zu- und Abfuhr von Heizmitteln zu Streckwerken, Galetten oder Walzentrommeln. So ist es beispielsweise für die Erhitzung einer Galette notwendig, ein Wärmeträgermittel zu dem Walzenmantel hinzuführen und das abgekühlte Trägermittel durch hohle Lagerwellen abzuführen. Bei den bekannten Galetten zum Wärmebehandeln und gegebenenfalls Verstrecken von Chemiefasern in Kabelform werden üblicherweise fliegend gelagerte Galetten von mehr als einem Meter Arbeitsbreite eingesetzt. Bei fliegend gelagerten rotierenden Körpern ist es erforderlich, durch eine hohle Lagerwelle sowohl das Heizmedium zuzuführen und entsprechend das gebrauchte, abgekühlte Trägermittel wieder aus dem Rotationskörper und der Hohlwelle abzuführen.

Für derartige Zwecke ist bereits mehrfach vorgeschlagen worden, ein Wärmeträgeröl einzusetzen, das auch unter den gewählten Bedingungen noch ausreichende Schmiereigenschaften für die relativ hohen beanspruchten Lager zeigt (s. z.B. Deutsche Offenlegungsschrift 1 660 564). Derartige Verfahren sind jedoch mit einer Reihe von Nachteilen verbunden, insbesondere sei hier auf die geringe erreichbare Temperaturkonstanz derartiger Systeme hingewiesen. Bei der Temperierung größerer Walzenkörper ergibt sich zwangsläufig ein Temperaturgefälle, das nur durch einen stark erhöhten Durchsatz abgemildert werden kann. Derartige Temperiersysteme sind für den technischen Einsatz bei Textilmaschinen meist unbrauchbar. Die geforderte Temperaturkonstanz der Rotationskörper von z.B. ± 1°C über die gesamte Arbeitsbreite einer großen Galette kann nur noch durch eine Kondensationsheizung erreicht werden. Hier wird das Wärmeträgermittel als Dampf zugeführt. Die Kondensation erfolgt an jeder Stelle des Systems bei gleichem Druck auch bei der gleichen Temperatur. Darüber hinaus gestattet die Ausnützung der Kondensationsenthalpie die Übertragung großer Wärmemengen auf kleiner Fläche. Als wirtschaftlich besonders günstig hat sich der Einsatz von Hochdruckdampf als Temperiermittel herausgestellt. Dieses Temperiermittel zeigt jedoch keinerlei schmierende Eigenschaften bei Dichtungsmaterialien und führt daher häufig zu einer verkürzten Standzeit der eingesetzen Dichtsysteme.

Die bisher bekannten Drehdurchführungen z.B. für eine Heizmittelzu- und -abfuhr bei Galetten und Streckwerken werden in der Deutschen Offenlegungsschrift 2 431 806 beschrieben. Gemäß dieser Vorliteratur ist es besonders günstig, sowohl die Heizmittelzuführung als auch das Abführrohr drehfest mit der Galette zu verbinden. Die offenbarte Lösung gemäß dieser Entgegenhaltung weist jedoch zwei Gleitringdichtungen auf, die zur Abdichtung des Temperiermitteldampfes in dem feststehenden Teil der Drehdurchführung gegenüber der Außenwelt bzw. der Heizmittelabführungsleitung eingesetzt werden. Die in dieser Entgegenhaltung vorgestellte Konstruktion ist aufwendig und störanfällig. Bei Verwendung von Hochdruckdampf von z.B. 23 bar Überdruck entsprechend einer Temperatur von ca. 220°C ist die Schmierwirkung des Dampfes auf die eingesetzten Dichtorgane außerordentlich gering. Es kann daher vorkommen, daß die eigentlichen Dichtelemente innerhalb kurzer Zeit unbeobachtet aufgebraucht werden und dann die als Stützorgane für diese Dichtelemente vorgesehenen Metallteile Kontakt miteinander bekommen. Wenn dies nicht rechtzeitig bemerkt wird, werden die Stützorgane innerhalb sehr kurzer Zeit beschädigt. Es besteht sogar die Gefahr, daß die genannten Teile so stark unter diesen Bedingungen zerstört werden, daß es bei hohen Überdrücken zu einem Bruch der Drehdurchführung kommen kann, wobei dann der Dichtungskopf auseinanderbrechen und sogar in außerordentlich gefährlicher Weise weggeschleudert werden könnte. Derartige Gefahren sind naturgemäß besonders bei Maschinen gegeben, die mit hoch belasteten aber durch ihre örtliche Anordnung schlecht zu überwachenden Drehdurchführungen ausgerüstet sind. Unter diesen Umständen kann von den bisher bekannten Drehdurchführungen eine große Unfallgefahr ausgehen.

Es bestand daher immer noch die Aufgabe, derartige Brüche bzw. Abrisse von Maschinenteile an Drehdurchführungen zu vermeiden. Darüber hinaus bestand die Aufgabe, Drehdurch führungen zu entwickeln, bei denen anhand von einfachen Anzeichen die Wirksamkeit der eingesetzten Dichtungsmaterialien überwacht werden kann.

Es gibt bekannte Ausführungen von Dichtungsköpfen, bei denen anhand von Markierungen der Fortgang der Abnützung an der Dichtung ersichtlich werden soll. Diese Methode erfordert eine aufwendige regelmäßige Kontrolle durch das Bedienungspersonal und ist daher nicht ausreichend sicher. Noch aufwendiger und schwieriger ist natürlich eine Kontrolle, wenn diese Markierungen nicht angebracht werden können, weil der Dichtungsverschleiß innerhalb des Kopfes ausgeglichen wird. In solchen Fällen ist eine Abnutzung nur in umständlicher Weise durch das Messen mit entsprechenden Tastlehren oder ähnlichem feststellbar, was natürlich bei einem kontinuierlichen Betrieb derartiger Vorrichtungen besonders hinderlich ist. Es bestand daher die zusätzliche Aufgabe, eine Vorrichtung zu entwickeln, die unter Vermeidung jeglicher Gefährdung für das Bedienungspersonal und natürlich auch des Produktionsprozesses das Versagen einer Dichtung anzeigt.

Darüber hinaus bestand die Aufgabe, eine entsprechende Drehdurchführung zu finden, bei der das Austauschen der Dichtungsringe erheblich vereinfacht ist. Insbesondere sollte ein solcher Austausch möglich sein, ohne den gesamten Dichtungskopf demontieren und ohne ein Einjustieren von Teilen vornehmen zu müssen.

Diese kombinierte Aufgabenstellung konnte in allgemeiner Form gelöst werden, wie das im kennzeichnenden Teil des Patentanspruches 1 festgehalten wurde. Die Unteransprüche sind auf bevorzugte Ausführungsformen der Erfindung gerichtet.

Die wesentlichen Merkmale der vorliegenden Erfindung sind der Einsatz von nur einer Gleitringdichtung und zwar auch bei dem Transport von zwei verschiedenen Medien von einem feststehenden Gehäuse in eine Hohlwelle, und der Einsatz einer Blockiervorrichtung, die die Verschiebung des Hohlkörpers auf der Oberfläche der Hohlwelle begrenzt. Eine derartige Blockiervorrichtung kann beispielsweise aus einer Längsnut in der Hohlwelle und einem entsprechenden Führungsstift in dem Hülsenkörper bestehen, wobei die Längsnut von der Stirnseite der Hohlwelle bis zu einer vorgegebenen Länge so bemessen ist, daß der mit dem Hülsenkörper verbundene Führungsstift ein direktes Berühren von Hülsenkörper und Stützfläche verhindert. Weiterhin muß die für den Betrieb der Gleitringdichtung benötigte Druckfeder durch einen Haltering gehalten werden, dessen Lage auf der Hohlwelle durch eine Fixiereinrichtung festgelegt werden kann. Diese Fixiereinrichtung hat dafür zu sorgen, daß der Haltering nicht von der Hohlwelle abgleiten kann. Eine derartige Fixiereinrichtung kann im einfachsten Fall beispielsweise aus einem Sicherungsring bestehen, der in einer Ringnut in der Hohlwelle gehalten wird. Darüberhinaus muß das feststehende Gehäuse eine verschließbare Öffnung, beispielsweise einen Deckel, aufweisen, der eine Öffnung des Gehäuses gegenüber der Stirnseite der Hohlwelle gestattet. Durch eine solche Vorrichtung ist es möglich, bei geeigneter Ausführung der Fixiereinrichtung für den Haltering, einen Austausch eines Dichtungsrings vorzunehmen ohne Demontage der gesamten Drehdurchführung.

Falls ein getrennter Transport von zwei verschiedenen fluiden Medien in die Hohlwelle oder zurück vorzusehen ist, muß die erfindungsgemäße Vorrichtung ein Rohr aufweisen, daß konzentrisch in der Hohlwelle geführt wird. Diese Führung kann im einfachsten Fall durch eine einfache Verschraubung im Verschlußdeckel des feststehenden Gehäuses erfolgen. Es ist dann in der Drehdurchführung keine drehende Bewegung zwischen dem Innenrohr und dem Gehäuse oder aber zwischen Innenrohr und der Hohlwelle abzudichten.

Die Vorrichtung gemäß der Erfindung gestattet den Transport von fluiden Medien von einem feststehenden Gehäuse in eine rotierende Hohlwelle bzw. in an diese Hohlwelle angeschlossene Vorrichtungen und zurück. Bei dem Betrieb dieser Vorrichtung ergibt sich zwangsläufig, daß das eingesetzte Dichtungsmaterial, der verschleißbare Dichtring, abgenutzt wird. Gemäß der vorliegenden Erfindung wird dieser Verschleiß bis zu einem gewissen Grade entsprechend dem Stand der Technik durch das Ausdehnen einer Druckfeder ausgeglichen. Im Gegensatz zu dem Stand der Technik wird jedoch ein metallisches Berühren von Hülsenkörper und Stützflächen durch Einsatz einer Blockiereinrichtung verhindert. Falls also der Verschleiß des eingesetzten Dichtungsringes nicht mehr durch ein Nachgleiten des Hülsenkörpers ausgeglichen werden kann, kommt es zwangsläufig zu einer Undichtigkeit, d.h. an der Einführungsstelle der Hohlwelle in das feststehende Gehäuse tritt eine Leckage auf.

Dieser, nach dem Stand der Technik unbedingt zu vermeidende Vorgang wird hier sinnvoll benutzt, um eine Anzeige für das notwendige Auswechseln des Dichtungsringes zu haben. Bei Verwendung von ungefährlichen und insbesondere ungiftigen Wärmeträgern, d.h. insbesondere bei dem Einsatz von Wasserdampf, sind üblicherweise keine besondere Sicherheitsvorkehrungen gegen das Austreten des Wärmeträgers zu treffen, sofern sichergestellt wurde, daß sich kein Bedienungsmann in der Nähe der Leckagestelle befinden kann. Hier würde also eine leichte Dampffahne anzeigen, daß es notwendig ist, bei der erfindungsgemäßen Drehdurchführung den verschlissenen Dichtungsrring durch einen neuen zu ersetzen. Falls ein Austreten eines Wärmeträgers dagegen zu einer Gefährdung führen könnte, ist die eigentliche Einführungsstelle in geeigneter Weise zu kapseln. Dies kann beispielsweise durch Anbringen eines leichten Metallgehäuses erfolgen, das z.B. zusätzlich Kühlrippen und einen Abfluß, über den die austretenden Leckagen gesammelt und abtransportiert werden können, aufweist. In einer solchen Kapsel kann auch ein entsprechender Fühler eingebaut werden der bei dem Austreten von Leckagen ein Signal abgibt. Bei dem Einsatz von möglicherweise gesundheitsgefährlichen Wärmeträgern kann natürlich diese Kapsel zusätzlich an eine Absaugung oder ähnliches angeschlossen werden. Selbstverständlich braucht diese Kapsel keine besondere, aufwendige Abdichtung an der Welle aufzuweisen. In dieser Kapsel herrscht ja nur der atmosphärische Druck der Umgebung oder ein leichter Unterdruck, falls die Kapsel an eine Absaugung angeschlossen wurde.

Im Gegensatz zu dem Stand der Technik ist es möglich, die Sicherheitsdrehdurchführung mit z.B. dem Lagergehäuse der der zugehörigen Galette fest zu verbinden, falls dies gewünscht wird. Der federnde Aufbau der eingesetzten Gleitringdichtung sowie die feste, nicht drehbare Anordnung eines Rohrs im Inneren der Hohlwelle für ein zweites Medium führt dazu, daß die sonst bei derartigen Vorrichtungen zu beobachtenden Spannungen der einzelnen Bauteile nur in verringertem Maße auftreten. Besondere Maßnahmen zur Kompensation von Verspannungen sind daher nicht erforderlich.

Zum weiteren Verständnis der Erfindung sollen Ausführungsbeispiele dienen, wie sie in den beigefügten Figuren wiedergegeben wurden.

Figur 1 zeigt im Querschnitt ein Sicherheitsdrehdurchführung für die kommunizierende Verbindung eines Raumes in einem feststehenden Gehäuse mit einem Raum in einer rotierenden Hohlwelle.

Figur 2 zeigt entsprechend einen Querschnitt durch eine Drehdurchführung für zwei getrennt zu führende fluide Medien.

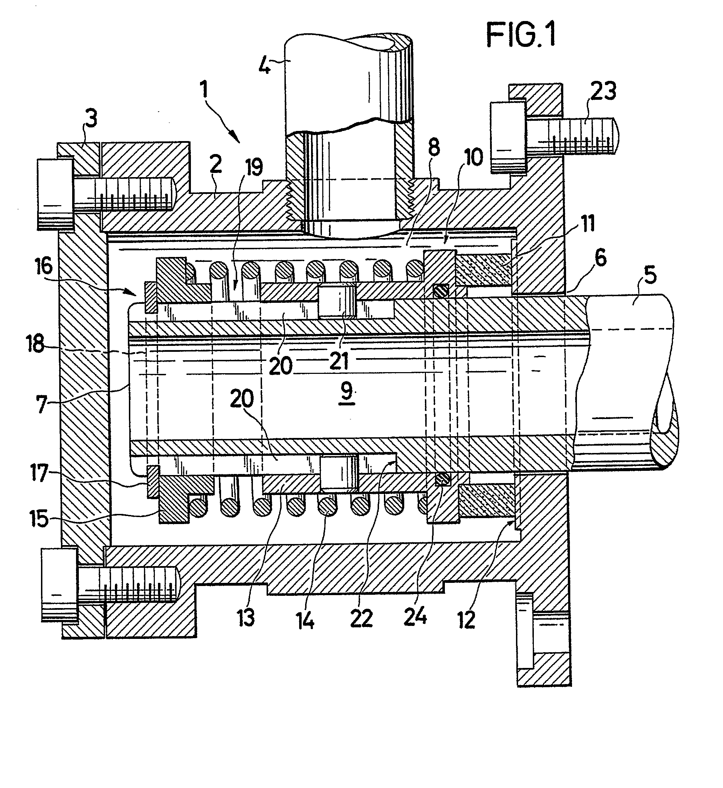

In Figure 1 ist das druckfest verschließbare, feststehende Gehäuse mit 1 gekennzeichnet. Es besteht aus dem Hohlkörper 2, einem zu öffnenden, druckfesten Verschluß 3 und einer Anschlußleitung für ein fluides Medium 4. Die Einführungsstelle der Hohlwelle 5 in das feststehende Gehäuse 1 wurde mit 6 gekennzeichnet. Die Hohlwelle 5 weist eine offene Stirnseite 7 auf. Die offene Stirnseite befindet sich in einigem Abstand zu dem Verschluß 3 des Feststehenden Gehäuses 1, so daß ein fluides Medium von dem Anschluß 4 durch den Innenraum 8 des Hohlkörpers 2 und von dort über die offene Stirnseite 7 der Hohlwelle in den Innenraum 9 der Hohlwelle fließen kann.

Die Abdichtung zwischen der rotierbaren Hohlwelle 5 und dem feststehenden Gehäuse 1 erfolgt mittels einer Gleitringdichtung 10, bei der ein Dichtungsring 11 auf eine Stützfläche 12 gepreßt wird. Die eigentliche Gleitringdichtung 10 besteht dabei aus einem Hülsenkörper 13, der auf der Hohlwelle 5 entlang verschiebbar ist, einer Druckfeder 14, einem Gleitdichtungsring 11, einem Haltering 15 sowie einer Fixiereinrichtung 16. In dem Ausführungsbeispiel der Figur 1 besteht diese Fixiereinrichtung 16 aus einem Sicherungsring 17, der in einer Ringnut 18 geführt wird. Des weiteren weist die Gleitringdichtung Blockiervorrichtungen 19 auf, die im vorliegenden Fall aus einer Längsnut 20 und einem Führungsstift 21 bestehen, der mit dem Hülsenkörper 13 fest verbunden ist. Die Blockiervorrichtungen 19 arbeiten in der Weise, daß sie die Verschiebung des Hülsenkörpers 13 auf der Hohlwelle 5 nur in einem gewissen Gebiet gestatten. Der Hülsenkörper 13 kann auf die Hohlwelle aufgesetzt werden und dann in Richtung auf die Stützfläche 12 so weit verschoben werden, bis die Führungsstifte 21 and die Anschlagskanten 22 der Führungsnuten stoßen. Die Lage dieser Anschläge 22 ist so zu bemessen, daß auch beim einem Berühren des Führungsstiftes 21 an dem Anschlag 22 der Hülsenkörper 13 noch nicht in Berührung mit der Stützfläche 12 kommen kann.

Die Verschiebung des Hülsenkörpers 13 kann durch mehrere Blockiervorrichtungen 19 geführt werden, die zweckmäßigerweise symmetrisch auf der Oberfläche der Hohlwelle verteilt sind.

Wie bereits oben ausgeführt, soll sich der druckfeste Verschluß 3 des feststehenden Gehäuses 1 gegenüber der Stirnseite 7 der Hohlwelle 5 befinden, wobei jedoch ein ausreichender Zwischenraum zwischen dem Verschluß 3 und der Stirnseite 7 vorgesehen sein soll. Die Befestigung des feststehenden Gehäuses mit anderen Teilen der Apparatur, beispielsweise den Lagern der Hohlwelle, ist durch eine Schraube 23 schematisch angedeutet worden.

Aus der Zeichnung 1 ist ersichtlich daß bei dem unvermeidbaren Verschleiß des Dichtringes 11, der Hülsenkörper 13 auf der Hohlwelle in Richtung Stützfläche 12 durch die Kraft der Druckfeder 14 gedrückt wird. Um eine ausreichende Dichtung auch zwischen Hohlwelle 5 und Hülsenkörper 13 sicherzustellen, wurde eine Dichtung 24 vorgesehen. Im Gegensatz zu der Dichtung 11 wird jedoch die Dichtung 24 nicht durch eine schnelle Gleitbewegung belastet. Sie sorgt nur bei der sehr langsamen Verschiebung des Hülsenkörpers 13 auf der Hohlwelle 5 mit zunehmendem Verschleiß für eine entsprechende Abdichtung. Ist der Verschleiß des Dichtungsringes 11 so weit gediehen, daß der Hülsenkörper 13 mit seinem Führungsstift 21 den Anschlag 22 berührt, ist ein weiteres Nachrücken des Hülsenkörpers 13 in Richtung auf die Stützfläche 12 nicht mehr möglich.

Die Abdichtung wird dann zunehmend nicht mehr ausreichend sein, um einen Austritt des fluiden Mediums an der Einführungsstelle 6 zu verhindern.

Das Auswechseln einer verschlissenen Dichtung 11 erfolgt in der Weise, daß zunächst der druckfeste Verschluß 3 entfernt wird. Es können dann, nach Lösen der Fixiereinrichtung 16, d.h. in diesem Fall nach Entfernung des Federringes 17 aus der Nut 18, der Haltering 15, die Druckfeder 14 und der Hülsenkörper 13 von der Hohlwelle abgezogen werden. Nach Entfernung der Überreste des alten Dichtungsringes 11 wird ein neuer eingelegt und die Teile in umgekehrter Reihenfolge wieder montiert. Nach Verschluß des Deckels 3 kann diese Vorrichtung erneut eingesetzt werden.

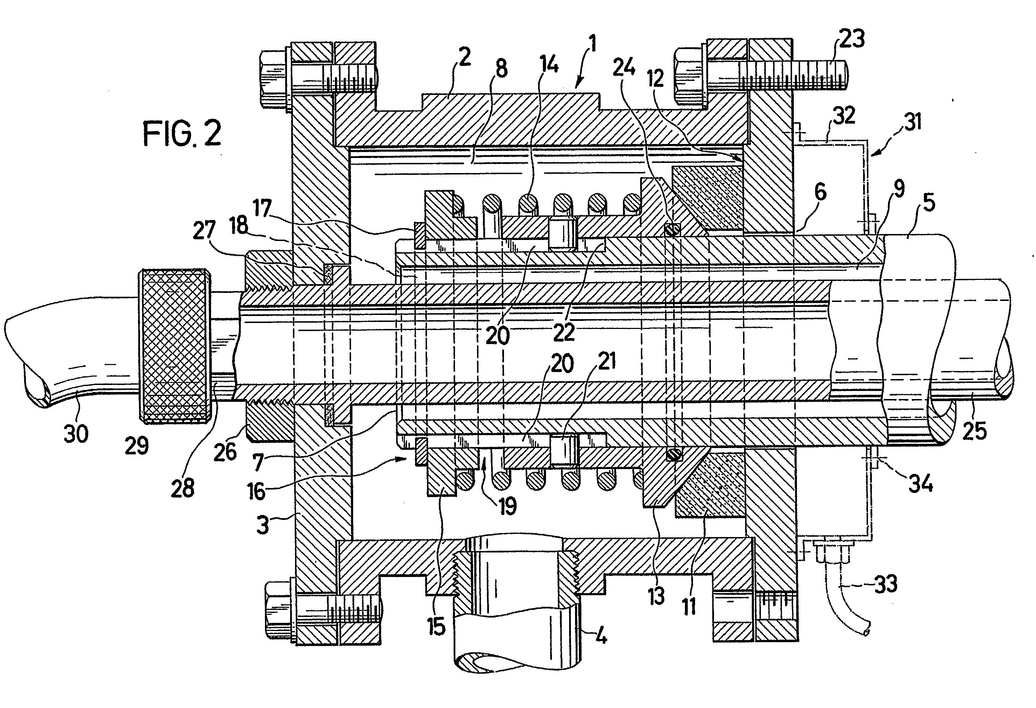

In Figur 2 ist eine sehr ähnliche Drehdurchführung wiedergegeben, in dem Verschluß 3 ist zusätzlich jedoch ein Rohr 25 mit Hilfe einer Verschraubung 26 so befestigt worden, daß sich das Rohr 25 im Innenraum der Hohlwelle 9 befindet, ohne die Hohlwelle 5 zu berühren. Die notwendige Abdichtung gegenüber dem Raum 8 und der Außenwelt erfolgt durch eine übliche Dichtung 27. Da das Rohr 25 fest mit dem Verschluß 3 verbunden ist, die Teile also keine Relativbewegung zueinander ausführen, kann hier übliches Dichtungsmaterial für feste Verbindungen eingesetzt werden. An der Verschraubung 26 ist für eine korrekte Montage des Rohres, ein Außensechskant 28 sowie eine Verschraubung 29 angebracht. Von dort aus kann das zweite fluide Medium beispielsweise über einen Schlauch 30 transportiert werden.

Als mögliche Ergänzung ist in der Figur 2 in gestrichelten Linien auch noch eine Kapsel 31 im Bereich der Einführungsstelle 6 angedeutet worden. Diese Kapsel 31 besteht aus einem Gehäuse 32 und ist mit einer Ableitung 33 für die austretenden Leckagen versehen. Da in der Kapsel 31 üblicherweise Atmophärendruck oder, bei Anschluß an eine Absaugung, keichter Unterdruck herrscht, ist eine besondere Abdichtung zwischen Kapsel und rotierender Hohlwelle 5 meist nicht erforderlich. In anderen Fällen kann sich eine derartige Abdichtung 34 auf bekannte, sehr einfache Ausführungsformen beschränken.

Bei Einsatz einer Kapsel 31 für das Auffangen von Leckagen ist dafür zu sorgen, daß dieses Auftreten von Leckagen sichtbar wird. Es ist daher zweckmäßig, in die Kapsel 31 oder in die Ableitung 33 Meßfühler anzuordnen, die z.B. auf ein Ansteigen der Temperatur, eine Änderung der Leitfähigkeit oder der Dielektrizitätskonstante reagieren.

**Patentansprüche**

1. Sicherheitsdrehdurchführung für fluide Medien zur kommunizierenden Verbindung wenigstens eines Raumes in einem feststehenden Gehäuse mit wenigstens einem Raum in einer rotierbaren Hohlwelle, bei der die Abdichtung von Hohlwelle und festehendem Gehäuse mittels Gleitringdichtungen erfolgt, wobei auf der Hohlwelle axial verschiebbare Hülsenkörper mittels Druckfedern Gleitdichtungsringe gegen Stützflächen des feststehenden Gehäuses pressen, dadurch gekennzeichnet, daß die stirnseitig offene Hohlwelle (5) in ein druckfest verschließbares, feststehendes Gehäuse (1) eingeführt und nur an der Einführungsstelle (6) mittels einer einzigen Gleitringdichtung (10) mit Dichtungsring (11) abgedichtet wird, wobei die Verschiebung des Hülsenkörpers (13) auf der Hohlwelle (5) mittels einer Druckfeder (14) in Richtung auf die Stützfläche (12) durch eine Blockiervorrichtung (19) so begrenzt wird, daß ein direkter Kontakt von Hülsenkörper (13) und Stützfläche (12) verhindert ist, daß das Gegenlager der Druckfeder (14) in an sich bekannter Weise durch einen Haltering (15) und eine Fixiereinrichtung (16) gegeben ist und, daß das feststehende Gehäuse (1) einen zu öffnenden, druckfesten Verschluß (3) gegenüber der offenen Stirnseite (7) der Hohlwelle (5) aufweist.

2. Vorrichtung nach Anspruch 1, dadurch gekennzeichnet, daß die Blockiervorrichtung (19) aus wenigstens einer Längsnut (20) in der Hohlwelle (5) und wenigstens einem darin gleitenden Führungsstift (21), der mit dem Hülsenkörper (13) verbunden ist, besteht und die Längsnut (20) von der Stirnseite (7) der Hohlwelle (5) ausgeht und in ihrer Länge so zu bemessen ist, daß der mit dem Hülsenkörper (13) verbundene Führungsstift (21) ein direktes Berühren von Hülsenkörper 13) und Stützfläche (12) verhindert.

3. Vorrichtung nach Anspruch 1 oder 2, dadurch gekennzeichnet, daß die Teile der Blockiervorrichtung (19), die eine Bergrenzung der axialen Verschiebung des Hülsenkörpers (13) auf der Hohlwelle (5) bewirken, keine Drehbewegungen relativ zueinander ausführen können.

4. Vorrichtung nach wenigstens einem der vorhergehenden Ansprüche, dadurch gekennzeichnet, daß die Einzelteile so bemessen sind, daß nach Öffnen des druckfesten Verschlusses (3), die verschiebbaren Teile der Gleitringdichtung (10) mit Blockiereinrichtung (19) und Fixiereinrichtung (16) demontier- und austauschbar sind, ohne daß das Gehäuse (1) selbst oder andere Teile verstellt oder demontiert werden müssen.

5. Vorrichtung nach wenigstens einem der vorhergehenden Ansprüche, dadurch gekennzeichnet, daß die Fixiereinrichtung (16) zur Festlegung des Halteringes (15) aus einem Sicherungsring (17) und einer Ringnut (18) in der Hohlwelle (5) besteht.

6. Vorrichtung nach wenistens einem der vorhergehenden Ansprüche, dadurch gekennzeichnet, daß zum getrennten Transport eines zweiten fluiden Mediums in der Hohlwelle (5), ein Rohr (25) koaxial in die Hohlwelle (5) eingeführt und nicht drehbar durch den Verschluß (3) geführt und an ihm befestigt ist.

7. Vorrichtung nach wenigstens einem der vorhergehenden Ansprüche, dadurch gekennzeichnet, daß die Einführungsstelle (6) der Hohlwelle (5) in das feststehende Gehäuse (1) durch eine Kapsel (31) mit Ableitung (33) versehen ist, um an der Gleitringdichtung bei verschlissenem Dichtungsring (11) austretende Leckagen anzeigen, sammeln und gefahrlos ableiten zu können.

**Claims**

1. A safety rotary transmission for fluid media for the communicating connection of at least one space in a stationary casing (1) with at least one space in a rotatable hollow shaft (5), in which the sealing-off of hollow shaft (5) and stationary casing (1) is carried out by means of face seals (10), axially displaceable sleeve bodies (13) on the hollow shaft (5) pressing sliding sealing rings (11) by means of compression springs (14) against supporting surfaces (12) of the stationary casing (1), wherein the hollow shaft (5) open at the face is introduced into a pressure-tight closable, stationary casing (1) and sealed off only at the point of entry (6) by means of a single face seal (10) with sealing ring (11), the displacement of the sleeve body (13) on the hollow shaft (5) by means of a compression spring (14) in the direction of the supporting surface (12) being limited by a blocking device (19) such that a direction contact of sleeve body (13) and supporting surface (12) is prevented, wherein the counter-bearing of the compression spring (14) is provided in a way known per se by the retaining ring (15) and a fixing device (16), and wherein the stationary casing (1) has a pressure-tight closure (3), which can be opened, opposite the open face (7) of the hollow shaft (5).

2. The apparatus as claimed in claim 1, wherein the blocking device (19) comprises at least one longitudinal groove (20) in the hollow shaft (5) and at least one guide pin (21) sliding therein, which is connected to the sleeve body (13), and the longitudinal groove (20) extends from the face (7) of the hollow shaft (5) and is dimensioned in its length such that the guide pin (21) connected to the sleeve body (13) prevents a direct contact of sleeve body (13) and supporting surface (12).

3. The apparatus as claimed in claim 1 or 2, wherein the parts of the blocking device (19) which effect a limitation of the axial displacement of the sleeve body (13) on the hollow shaft (5) cannot move rotationally relative to each other.

4. The apparatus as claimed in at least one of the preceding claims, wherein the individual parts are to be dimensioned such that, once the pressure-tight closure (3) has been opened, the displaceable parts of the face seal (10) with blocking device (19) and fixing device (16) can be dismantled and exchanged without the casing (1) itself or other parts having to be adjusted or dismantled.

5. The apparatus as claimed in at least one of the preceding claims, wherein the fixing device (16) for fixing the retaining ring (15) comprises a circlip (17) and an annular groove (18) in the hollow shaft (5).

6. The apparatus as claimed in at least one of the preceding claims, wherein, for the separate transfer of a second fluid medium in the hollow shaft (5), a pipe (25) is introduced coaxially into the hollow shaft (5) and guided non-rotatably by the closure (3), to which it is fixed.

7. The apparatus as claimed in at least one of the preceding claims, wherein the point of entry (6) of the hollow shaft (5) into the stationary casing (1) is provided by a capsule (31) with drainage pipe (33) in order to be able to indicate, collect and safely drain off leakages occurring at the face seal when the sealing ring (11) is worn.

**Revendications**

1. Transmission rotative de sécurité destinée à des milieux fluides, pour une liaison mettant en communication au moins un compartiment dans une enveloppe fixe (1) avec au moins un compartiment d'un arbre creux tournant (5), dans laquelle l'étanchéité de l'arbre creux (5) et de l'enveloppe fixe (1) est assurée par des garnitures mécaniques d'étanchéité (10), des corps de douille (13) mobiles axialement sur l'arbre creux (5) comprimant par des ressorts de pression des garnitures mécaniques d'étanchéité (11) contre les surfaces d'appui (12) de l'enveloppe fixe (1), caractérisée par le fait que l'arbre creux ouvert sur sa face antérieure (5) pénètre dans une enveloppe fixe (1) résistant à la pression et pouvant être fermée et qu'il n'est rendu étanche que sur le point d'entrée (6), au moyen d'une seule garniture mécanique d'étanchéité (10) ayant une bague d'étanchéité (11), le déplacement du corps de douille (13) sur l'arbre creux (5) au moyen d'un ressort de pression (14), étant limité de telle sorte par un dispositif de blocage (10) en direction de la surface d'appui (12) qu'un contact direct du corps de douille (13) et de la surface d'appui (12) est impossible, que la butée du ressort de pression (14) est donnée d'une manière connue en soi par l'anneau de blocage (15) et un dispositif de fixation (16) et que l'enveloppe fixe (1) présente une fermeture (3) résistant à la pression, à ouvrir, vis-à-vis de la face antérieure ouverte (7) de l'arbre creux (5).

2. Dispositif selon la revendication 1, caractérisé par le fait que le dispositif de blocage (19) est composé d'au moins une rainure longitudinale (20) de l'arbre creux (5) et d'au moins une goupille de positionnement (21) qui glisse dans la rainure, goupille reliée au corps de douille (13), et que la rainure longitudinale (20) prend naissance sur la face antérieure (7) de l'arbre creux (5), et est dimensionnée en longueur de telle sorte que la goupille de positionnement (21) reliée au corps de douille (13) interdit le contact direct entre le corps de douille (13) et la surface d'appui (12).

3. Dispositif selon la revendication 1 ou la revendication 2, caractérisé par le fait que les pièces du dispositif de blocage (19) qui produisent une limitation du déplacement axial du corps de douille (13) sur l'arbre creux (5), ne peuvent effectuer de rotation les unes par rapport aux autres.

4. Dispositif selon l'une au moins des revendications précédentes, caractérisé par le fait que les pièces unitaires sont dimensionnées de telle sorte que, après ouverture de la fermeture (3) résistant à la pression, les différentes pièces de la garniture mécanique d'étanchéité (10), ainsi que le dispositif de blocage (19) et le dispositif de fixation (16) sont démontables et remplaçables, sans que l'enveloppe elle-même (1) ou d'autres pièces aient à être déplacées ou démontées.

5. Dispositif selon au moins l'une des revendications précédentes, caractérisé par le fait que le dispositif de fixation (16) pour l'immobilisation de l'anneau de retenue (15) est composé d'un circlips extérieur (17) et d'une rainure annulaire (18) sur l'arbre creux (5).

6. Dispositif selon l'une au moins des revendications précédentes, caractérisé par le fait que, pour permettre un transfert séparé d'un deuxième milieu fluide dans l'arbre creux (5), un tube (25) pénètre coaxialement dans l'arbre creux (5) et traverse sans rotation la fermeture (3) à laquelle il est fixé.

7. Dispositif selon l'une au moins des revendications précédentes, caractérisé par le fait que le point de pénétration (6) de l'arbre creux (5) dans l'enveloppe fixe (1), est muni d'une capsule (31) avec un écoulement (33) et que toutes les émissions de fuites se produisant sur la garniture mécanique d'étanchéité lorsque la bague d'étanchéité est usée peuvent être signalées, recueillies et évacuées sans danger.

FIG.1

FIG. 2